# FASCICULE DE BREVET EUROPEEN

(11) **EP 2 495 210 B1**
(45) Date de publication et mention de la délivrance du brevet: **23.10.2013**
(21) Numéro de dépôt: 12290062.4
(22) Date de dépôt: 24.02.2012
(51) Int. Cl.: B66C 1/12, F16G 11/10, F16G 11/14

(54) **Elingue à usage unique**
Seilgeschirr für einmaligen Gebrauch
Single-use sling

(30) Priorité: 02.03.2011 FR 1100618
(43) Date de publication de la demande: 05.09.2012
(73) Titulaire: Nicolle, Hubert, 91530 Saint-Chéron (FR)
(72) Inventeur: Nicolle, Hubert, 91530 Saint-Chéron (FR)
(74) Mandataire: Flavenot, Bernard

(56) Documents cités:
- EP-A1- 0 527 695
- EP-A2- 0 598 219
- GB-A- 679 621
- US-A- 122 135
- US-A- 2 506 274
- US-A- 4 875 653
- US-A- 5 339 498
- US-A- 5 351 367
- US-A- 5 839 768
- US-A- 6 095 956
- US-B1- 6 317 938

## Description

La présente invention concerne les élingues, c'est-à-dire les éléments oblongs souples qui sont destinés à relier des charges lourdes à une extrémité d'un bras d'un appareil de levage comme une grue ou analogue, pour soulever et ensuite transporter ces charges d'un point, par exemple de stockage, à un autre, par exemple la plateforme d'un camion ou analogue.

L'invention concerne plus particulièrement les élingues qui sont dites "à usage unique", c'est-à-dire qui ne peuvent plus être réutilisées, essentiellement dans un but sécuritaire.

Les éléments lourds à soulever et à transporter peuvent être par exemple des barres, des tubes, des fers plats, etc., qui sont couramment utilisés notamment dans le domaine de la construction des bâtiments. Ils sont souvent regroupés en vue de leur transport et de leur manutention, sous forme de "fardeaux".

Dans leur réalisation la plus simple, les élingues utilisées pour soulever et transporter ces fardeaux sont constituées d'un lien, comme un câble en acier multibrins ou analogue, dont chaque extrémité est conformée en boucle. Une première extrémité est passée dans la boucle de la seconde extrémité pour former un noeud coulant qui est passé autour du fardeau à soulever, et la première extrémité est accrochée, par sa boucle, au bras de levage de la grue. Lorsque le fardeau est soulevé, le noeud coulant se resserre, ce qui permet de bien saisir et maintenir le fardeau qui peut ainsi être transporté en relative sécurité.

De telles élingues sont généralement fabriquées pour n'être utilisées qu'une seule fois. Cependant, il arrive que, de façon volontaire ou involontaire, elles soient réutilisées, au détriment de la sécurité notamment des personnes en charge de la manipulation ou proches du lieu de cette manipulation. La réutilisation d'une élingue est favorisée par le fait que, rien a priori ne permet à un manutentionnaire de savoir si elle a déjà été, ou non, utilisée, mis à part le fait qu'elle est parfois munie d'une étiquette sur laquelle il est possible de mentionner que l'élingue a déjà été utilisée pour le levage d'une charge.

Pour pallier ce défaut, il a été mis au point des élingues dites "à usage unique" comme celle qui est décrite et illustrée dans le EP-A-0 527 695

L'élingue selon ce document antérieur est constituée d'un câble, à une extrémité duquel est ménagée une boucle, d'un manchon fixé à l'autre extrémité du câble, et d'une pièce de verrouillage. Cette pièce de verrouillage comporte un trou traversant permettant son engagement sur le câble et son libre coulissement sur celui-ci, et une encoche qui débouche, d'une part dans l'une de ses faces latérales sur toute la largeur de celle-ci par une fente de largeur au moins égale au diamètre du câble, et d'autre part dans le trou traversant qui est d'une section correspondant sensiblement à la section du manchon, le manchon ayant en outre une forme générale tronconique dont la petite base est tournée du côté du câble, pour que ce manchon se coince dans le trou par emboîtement en force conique.

Quand l'élingue selon cet art antérieur a été utilisée une première fois, pour la libérer de sa charge, il est absolument nécessaire de procéder à sa destruction, et elle est de ce fait non réutilisable. Elle est donc bien "à usage unique".

Il existe aussi des élingues comme celles qui sont décrites dans les US-A-2 506 274 et GB-A-679 621.

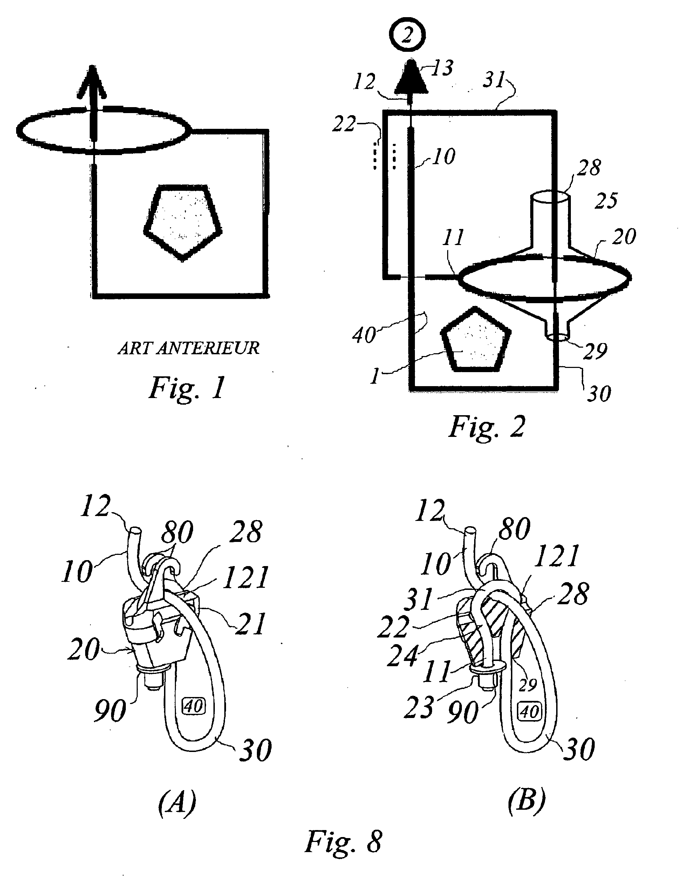

Les élingues selon ces documents antérieurs, dont certaines sont du type à noeud coulant comme illustré schématiquement sur la figure 1 annexée, ne permettent pas vraiment d'obtenir le résultat escompté. Notamment, elles ne constituent pas toujours des élingues à usage unique, car les utilisateurs arrivent très facilement à les recycler et à les réutiliser, contrairement aux règles de sécurité en vigueur dans de nombreux pays. De plus, leur coût de revient essentiellement dû à celui de la pièce de verrouillage-blocage est relativement important car cette pièce doit avoir des dimensions relativement importantes pour pouvoir supporter toutes les charges retenues par l'élingue et résister aux effets de traction.

Aussi la présente invention a-t-elle pour but de réaliser une élingue à usage unique qui pallie en grande partie l'inconvénient mentionné ci-dessus, d'une réalisation simple et peu coûteuse à fabriquer, très facile à utiliser, et pouvant ainsi être largement commercialisée.

Plus précisément, la présente invention a pour objet une élingue pour liaison entre une charge et des moyens de levage, dont les caractéristiques sont énoncées dans la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 représente le schéma de principe des élingues selon l'art antérieur,
La figure 2 représente le schéma de principe de l'élingue à usage unique selon l'invention,
La figure 3 représente, dans une vue de face et partiellement en écorché, un premier mode de réalisation de l'élingue à usage unique selon l'invention en accord avec le schéma de la figure 2,
Les figures 4 et 5 représentent l'un des éléments essentiels entrant dans la constitution de l'élingue à usage unique selon l'invention, celui qui est représenté en écorché sur la figure 3, la figure 4 étant une vue en coupe longitudinale de cet élément, la figure 5 étant une vue en perspective de ce même élément selon les figures 3 et 4,
Les figures 6 et 7 représentent une partie de l'élingue à usage unique selon l'invention, dans un second mode de réalisation, la figure 6 étant une vue en coupe longitudinale de cette partie d'élingue et la figure 7 étant une vue de dessous, et
Les figures 8A et 8B représentent deux vues d'un mode de réalisation industriel préféré de l'élingue selon l'invention, la figure 8A étant une vue en perspective de l'élingue, la figure 8B étant également une vue en perspective, mais partiellement en écorché.

Il est précisé que, dans la présente description, si l'adverbe "sensiblement" est associé à un qualificatif d'un moyen donné, ce qualificatif doit être compris au sens strict ou approché.

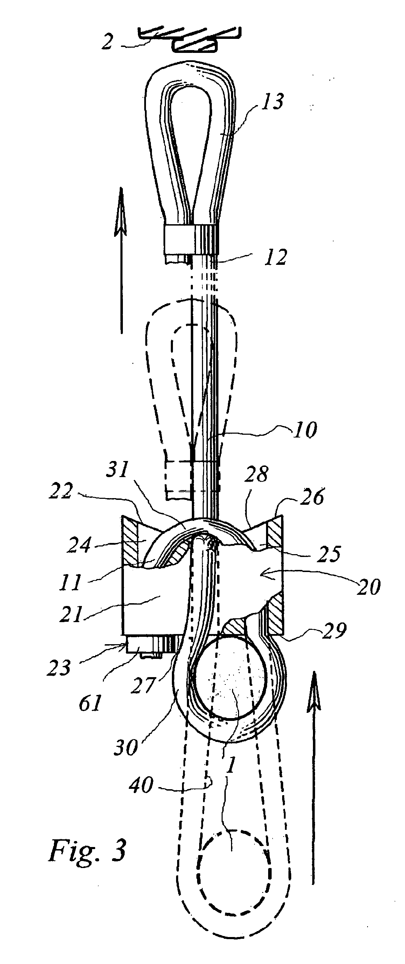

En référence aux figures annexées et plus particulièrement aux figures 2 et 3, l'invention concerne une élingue à usage unique pour la réalisation d'une liaison entre une charge 1, par exemple un faisceau de barres de fers ou de ferrailles à béton, de tubes métalliques, etc., et des moyens de levage 2, cette élingue comportant un câble 10, par exemple en acier ou analogue, des moyens de verrouillage-blocage 20 montés en coopération avec une première extrémité 11 du câble, et des moyens d'accrochage 13 de la seconde extrémité 12 du câble, comme une boucle d'accrochage ou analogue, avec les moyens de levage 2 comportant par exemple un crochet de grue ou analogue qui a été représenté très schématiquement sur la figure 2, sachant que ce crochet est connu en lui-même et qu'en outre il n'entre pas dans le champ de définition de l'invention.

Selon une caractéristique de l'invention, les moyens de verrouillage-blocage 20 comportent une pièce solide 21, un trou 24 réalisé dans cette pièce solide 21 et débouchant en surface de la pièce solide par un premier orifice 22, par exemple sur la première face 26 en V de la pièce solide selon l'illustration du mode de réalisation sur les figures 3 à 5.

Ces moyens de verrouillage-blocage 20 comportent en outre des moyens 23 pour solidariser la première extrémité 11 du câble 10 avec la pièce solide 21 via le trou 24, par exemple dans ce trou comme il sera explicité ci-après, selon un mode de réalisation préférentiel de ces moyens 23.

Il est aussi prévu une percée traversante 25 réalisée dans la pièce solide 21 et débouchant en surface de cette pièce solide par des deuxième et troisième orifices 28, 29, et agencée dans la pièce solide de façon que les premier et deuxième orifices 22, 28 soient situés à une distance non nulle l'un de l'autre, dans un but qui sera explicité ci-après.

Avec les caractéristiques décrites ci-dessus, le câble 10 de l'élingue selon l'invention prend, en combinaison avec cette pièce solide 21, la configuration structurelle décrite ci-dessous.

Le câble 10 dont la première extrémité 11 est solidarisée avec la pièce solide 21 via le trou 24, est monté en coopération avec cette pièce solide de façon que, figure 3, après être sorti de la pièce solide par le premier orifice 22, il passe dans la percée traversante 25 en y entrant par le deuxième orifice 28 et émerge de la pièce solide par le troisième orifice 29, la partie de câble 30 émergeant de ce troisième orifice 29 étant alors passée entre la portion de câble 31 comprise entre les premier et deuxième orifices 22, 28, et la partie de surface 121, qui est comprise entre les premier et deuxième orifices 22, 28, de la pièce solide 21, en l'occurrence la première face 26 sur le mode de réalisation illustré sur la figure 3, en formant de ce fait une boucle fermée 40 apte à entourer la charge 1 représentée en traits continus et en traits interrompus sur la figure 3.

Les figures 2 et 3, prises ensemble, explicitent le principe de la structure et la structure elle-même d'une telle élingue selon l'invention, par comparaison avec une élingue de l'art antérieur dont le schéma de principe est illustré sur la figure 1.

Selon une caractéristique préférentielle de l'invention, les moyens de verrouillage-blocage 20 comportent en outre une paroi courbe convexe 50 présentant une courbure continue et reliant, à la façon d'un pontet, une partie des bords des premier et deuxième orifices 22, 28.

Cette paroi courbe convexe peut être rapportée sur la pièce 21. Mais, très avantageusement sur le plan de la fabrication de l'élingue, elle est réalisée d'une seule pièce, dans la masse de la pièce solide 21.

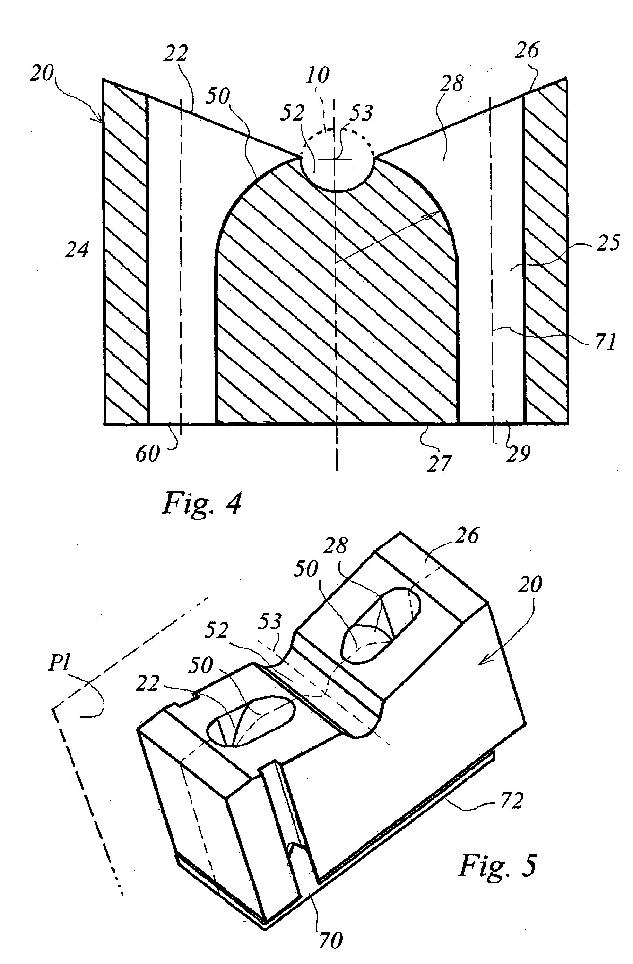

Selon une autre caractéristique de l'invention, les moyens de verrouillage-blocage 20 comportent en outre une gorge 52 réalisée en creux dans la paroi courbe convexe 50, cette gorge étant ouverte latéralement et à ses deux extrémités, figure 5, et son axe 53 faisant un angle non nul, de préférence un angle droit, avec une droite passant sensiblement par les centres des deux orifices 22, 28.

Cette gorge 52 est en outre définie sur une surface sensiblement cylindrique de révolution de diamètre au moins égal à celui du câble 10 pour le recevoir, et sa profondeur maximale est au plus égale au diamètre du câble 10. Sur la figure 4, à titre d'exemple, cette profondeur est égale au rayon du câble.

En outre, de façon très préférentielle, la paroi courbe convexe 50 est définie sur une surface sensiblement cylindrique de révolution dont le diamètre est au moins égal à quatre fois le diamètre du câble 10, de façon que la portion 31 du câble définie ci-avant ait une courbure normale sans déformation anguleuse ou analogue, comme il sera explicité ci-après.

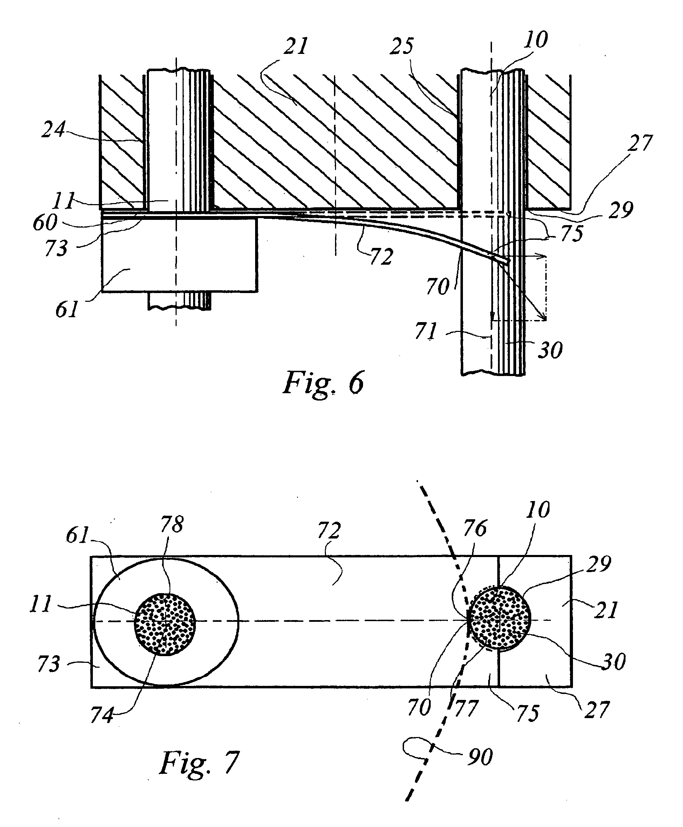

De façon avantageuse, comme illustré sur les figures 3, 6 et 7, les moyens 23 pour solidariser la première extrémité 11 du câble 10 avec la pièce solide 21 via le trou 24 sont constitués par le fait que le trou débouche en surface de la pièce solide 21 par un quatrième orifice 60 opposé au premier orifice 22, le câble 10 passant dans le trou de façon que sa première extrémité 11 émerge de la pièce solide 21 par ce quatrième orifice 60, figures 3 et 6.

Ces moyens 23 comportent alors en outre une bague 61 ou analogue fixée par tous moyens, de préférence permanents et non démontables, comme une soudure ou analogue, sur la partie de la première extrémité 11 du câble 10 émergeant de la pièce solide 21 par le quatrième orifice 60, la dimension transversale de la bague étant en outre définie de façon à former un épaulement contre le bord de ce quatrième orifice.

De façon préférentielle, pour une facilité de fabrication de la pièce solide 21, la percée traversante 25 et le trou 24 sont réalisés dans la pièce solide 21 suivant deux axes sensiblement parallèles et en débouchant respectivement sur deux faces opposées 26, 27 de la pièce solide.

Selon une autre réalisation préférentielle, l'élingue selon l'invention comporte en outre des moyens pour exercer une force en un point d'appui 70 situé sur la partie de câble 30 émergeant de la pièce solide 21 par le troisième orifice 29, ce point d'appui 70 étant situé à proximité du troisième orifice 29.

Cette force est constituée d'au moins l'une des trois forces suivantes : (i) une première force sensiblement parallèle à l'axe longitudinal 71 de la percée traversante 25 et orientée de façon à tendre à éloigner la partie de câble 30 émergeant par le troisième orifice 29, de ce troisième orifice, (ii) une deuxième force sensiblement perpendiculaire à l'axe longitudinal 71 de la percée traversante 25, et (iii) une troisième force oblique par rapport à l'axe longitudinal 71 de la percée traversante 25 pour tendre à éloigner la partie de câble 30 émergeant par le troisième orifice 29, de ce troisième orifice.

Dans le mode de réalisation illustré sur les figures 6 et 7, qui permet d'obtenir à la fois les trois types de force (i)-(iii) définis ci-dessus, les moyens pour exercer sur le câble la force au niveau du point d'appui 70 comportent une lame 72, par exemple élastique, et des moyens pour fixer une première extrémité 73 de cette lame en un endroit déterminé 74 de la surface de la pièce solide 21, de façon que la seconde extrémité 75 de la lame vienne en contact, en ce point d'appui 70, avec la partie de câble 30 émergeant par le troisième orifice 29.

De plus, la longueur de la lame 72 prise entre cet endroit déterminé 74 de la surface de la pièce solide 21 et sa seconde extrémité 75 est choisie de façon qu'elle soit supérieure à la distance minimale séparant cet endroit déterminé 74 et la surface latérale de la partie de câble 30 émergeant par le troisième orifice 29 qui est située au niveau de ce troisième orifice, figure 6. De cette façon, la lame prend une forme courbe comme illustré sur la figure 6, et, de façon connue, applique sur le câble au moins une force oblique Fob qui peut se décomposer en deux composantes, une première Fpe perpendiculaire à l'axe 71 et une autre Fpa parallèle à ce même axe 71.

Une telle lame 72 peut être constituée d'une plaque plane en un matériau élastique, comme illustré. Mais elle peut aussi être une plaque renforcée pour diminuer son élasticité. Par exemple, elle peut avoir une section en U et/ou elle peut comporter des nervures de renfort longitudinales.

En outre, de façon avantageuse, pour que la lame se positionne parfaitement par rapport à la partie de câble 30 émergeant de la pièce solide par le troisième orifice, sa seconde extrémité 75 comporte une encoche 77, figure 7, apte à entourer partiellement, sur au plus cent quatre-vingts degrés, la surface latérale de cette partie de câble 30.

Les moyens pour fixer la première extrémité 73 de la lame en un endroit déterminé 74 de la surface de la pièce solide 21 peuvent être constitués de différentes façons. Cependant, de façon avantageuse, compte tenu des caractéristiques définies ci-dessus, ces moyens sont avantageusement constitués par le fait que cette première extrémité comporte une percée 78 d'un diamètre supérieur à celui du câble 10 et inférieure à la dimension hors-tout de la bague 61, la première extrémité 11 du câble 10 passant alors dans la percée 78 pratiquée dans la première extrémité 73 de la lame élastique, et cette première extrémité de la lame 72 étant interposée entre la bague 61 et la surface de la pièce solide 21.

Selon un autre mode de réalisation, les moyens pour exercer une force sur le point d'appui 70 sont constitués d'une rondelle 90 qui n'est pas spécialement élastique, comme illustré sur les figures 8A et 8B et évoqué en traits interrompus sur la figure 7. Cette rondelle 90 comporte la percée centrale 78 d'un diamètre supérieur à celui du câble 10 et inférieure à la dimension hors-tout de la bague 61. La première extrémité 11 du câble 10 passe dans cette percée 78 et la rondelle 90 est interposée entre la bague et la surface de la pièce solide 21, le bord de la rondelle positionnée en biais venant alors buter contre le câble, c'est-à-dire au point d'appui 70 situé sur la partie de câble 30 émergeant de la pièce solide 21 par le troisième orifice 29 pour obtenir le résultat comme défini ci-avant.

Dans ce mode de réalisation, comme visible sur les figures 8A et 8B, les deux orifices 60 et 29 peuvent être plus proches l'un de l'autre que dans le mode de réalisation selon les figures 6 et 7, induisant le fait que les dimensions de la pièce 21 peuvent être réduites, et en conséquence son coût de revient.

Un autre avantage de ce mode de réalisation avec la rondelle 90, par rapport au mode de réalisation avec la lame 72, réside dans le fait que la rondelle se positionne toujours d'elle-même correctement par rapport au câble, ce qui n'est pas le cas de la lame.

Etant donné qu'elle travaille en compression, quand l'élingue est utilisée comme explicité ci-après, la pièce solide 21 n'a pas besoin d'avoir des dimensions importantes. Malgré tout, elle sera de préférence réalisée en un matériau métallique, optionnellement en "zamac".

Le zamac est avantageux car c'est un matériau qui se prête bien à l'injection sous pression dite "à chambre chaude", ce qui permet de réaliser la pièce solide 21 avec une bonne précision, bien que cet avantage ne soit pas primordial dans le cas de l'invention, et surtout en un temps de cycle court, ce qui réduit son coût de revient.

II est bien souligné que le trou 24 et la percée traversante 25 peuvent être rectilignes (figures 3 et 4) ou non (figure 8) ; séparés par une portion de paroi (figures 3 et 4) ou non (figure 8) et avoir dans ce cas une partie commune et/ou parallèles (figures 3 et 4) ou non (figure 8).

Selon une autre caractéristique de l'invention, l'élingue comporte en outre au moins une butée 80 solidaire en saillie de la partie de surface 121 définie ci-avant, cette butée 80 étant agencée pour maintenir et guider au moins temporairement la partie de câble 30 passant entre la portion de câble 31 comprise entre les premier et deuxième orifices 22, 28 et la partie de surface 121, à proximité de cette partie de surface 121.

De façon préférentielle, il peut même être prévu deux butées, comme illustré sur les figures 8A et 8B, pour répondre aux deux cas possibles, c'est-à-dire selon le sens dans lequel la partie de câble 30 passe sous la portion de câble 31.

Selon une réalisation avantageuse, ces butées sont constituées par des crochets ou analogues, pour faciliter le passage et/ou la mise en place de la partie de câble 30 sous les butées.

L'élingue telle que décrite ci-dessus en regard des figures 3 à 7, s'utilise et fonctionne comme décrit ci-dessous.

Il est tout d'abord précisé que l'élingue peut être fournie aux utilisateurs sous la forme telle qu'elle est illustrée sur la figure 3, et plus particulièrement dans sa configuration représentée en partie en traits interrompus, c'est-à-dire avec la boucle 40 en forme de noeud coulant de grande dimension.

Cependant, de façon préférentielle, elle est plutôt fournie dans la configuration où la partie 30 du câble 10 n'est pas encore passée entre la portion de câble 31 et la paroi courbe convexe 50 de la pièce 21 comme illustré sur la figure 3, mais est pendante à la sortie de l'orifice 29.

Dans ce cas, l'utilisateur de l'élingue passe cette partie de câble 30 sous la charge 1 à soulever qui généralement repose sur des plots, barres ou analogues, par exemple posés sur le sol.

Ensuite, en la recourbant pour former la boucle 40, il passe cette partie de câble 30 entre la paroi courbe convexe 50 de la pièce 21 et la portion de câble 31 telle que définie auparavant. La boucle 40 sous sa forme longue est alors formée autour de la charge 1, comme illustré en traits interrompus sur la figure 3.

Puis l'utilisateur accroche la seconde extrémité 12 du câble 10 en forme de boucle d'accrochage, au crochet de la grue ou analogue.

La grue est ensuite commandée pour soulever la charge 1 qui commence à tirer sur l'extrémité 12 du câble 10. Etant donné le poids de la charge 1, la boucle 40 en forme de noeud coulant commence par se resserrer, pour pendre une configuration comme celle qui est illustrée en traits pleins sur la figure 3.

Au fur et à mesure que la grue tire sur l'extrémité 12 du câble 10, il s'exerce une tension de traction sur tout le câble, et donc aussi sur la portion de câble 31 qui tend alors. à s'ancrer, par déformation plastique, dans la partie de câble qui passe entre cette portion de câble 31 et la surface de la pièce solide 21, jusqu'à ce que la charge 1 vienne totalement en butée contre la surface de la pièce solide, en l'occurrence sa seconde face 27 dans la représentation selon la figure 3, ce qui est tend à encore plus ancrer la portion de câble 31 dans la partie de câble 30 qui passe entre elle et la surface de la pièce 21, plus particulièrement dans la gorge 52 dans le mode de réalisation illustré.

Il est néanmoins précisé que, si la charge 1 est suffisamment lourde, il est possible que l'ancrage de la portion de câble 31 dans la partie de câble 30 s'effectue de façon définitive avant que la charge 1 ne vienne au contact de la pièce solide 21 comme illustré sur la figure 3.

La charge soulevée est alors transportée selon les souhaits de l'utilisateur, par exemple depuis un lieu de stockage jusqu'à une plateforme de camion ou analogue.

Quand le transport de la charge est terminé, pour la libérer de l'élingue, il n'est pas possible de détendre la boucle 40 car la portion de câble 31 est trop fortement ancrée dans la partie de câble 30 qui passe entre elle et la surface de la pièce solide 21. La seule solution est de couper la partie de câble 30 qui entoure la charge.

La coupe de cette partie de câble 30 rend totalement impossible la réutilisation de l'élingue qui est donc, réellement, à usage unique.

L'élingue selon le mode de réalisation illustré sur les figures 8A et 8B fonctionne comme explicité ci-dessus, mais avec en outre le fait que, quand la force de traction commence à s'exercer sur l'extrémité 12 du câble 10, la partie de câble 30 qui passe sous la portion 31 est guidée par l'une ou l'autre des deux butées 80 et ne s'aligne pas sur la verticale passant par la portion 31. La partie de câble ne soulèvera donc pas notablement la portion de câble 31.

En fait, ces butées 80 ont pour but d'éviter, avant que la charge 1 ne soit soulevée, que la traction initiale exercée sur l'extrémité 12 du câble déforme en V la portion de câble 31 comprise entre les deux orifices 22 et 28. Cet effet indésirable ce produit pour des câbles essentiellement peut souples et tant que la charge 1 n'est pas soulevée.

En effet, si cette portion de câble 31 se déforme en V, elle ne permet plus, ou très difficilement, de coincer la partie de câble 30 entre elle et la partie de surface 121, et l'élingue ne peut alors plus jouer sa fonction d'élingue à usage unique.

Il est à remarquer que, si à la fin de la traction, la butée 80 se rompt, ceci ne change pas le fonctionnement de l'élingue, ni le fait qu'elle est toujours à usage unique.

## Revendications

1. Elingue à usage unique pour liaison entre une charge (1) et des moyens de levage (2), ladite élingue comportant un câble (10), des moyens de verrouillage-blocage (20) montés en coopération avec une première extrémité (11) du dit câble, et des moyens d'accrochage (13) de la seconde extrémité (12) du dit câble avec les moyens de levage (2), **caractérisée par le fait que** lesdits moyens de verrouillage-blocage (20) comportent :
• une pièce solide (21),
• un trou (24) réalisé dans ladite pièce solide (21) et débouchant en surface de ladite pièce solide (21) par un premier orifice (22),
• des moyens (23) pour solidariser la première extrémité (11) du dit câble (10) avec ladite pièce solide (21) via ledit premier trou (24),
• une percée traversante (25) réalisée dans ladite pièce solide (21) et débouchant en surface de ladite pièce solide par des deuxième et troisième orifices (28, 29), lesdits premier et deuxième orifices (22, 28) étant situés à une distance non nulle l'un de l'autre,
• ledit câble (10) étant monté en coopération avec ladite pièce solide (21) de façon que, après être sorti de ladite pièce solide par ledit premier orifice (22), il passe dans ladite percée traversante (25) en y entrant par le deuxième orifice (28) et émerge de ladite pièce solide (21) par le troisième orifice (29), la partie de câble (30) émergeant du dit troisième orifice (29) passant alors entre la portion de câble (31) comprise entre les premier et deuxième orifices (22, 28) et la partie de surface (121), qui est comprise entre les premier et deuxième orifices (22, 28), de la pièce solide (21) en formant une boucle (40) apte à entourer ladite charge (1).

2. Elingue selon la revendication 1, **caractérisée par le fait que** lesdits moyens de verrouillage-blocage (20) comportent en outre une paroi courbe convexe (50) présentant une courbure continue et reliant, à la façon d'un pontet, une partie des bords des premier et deuxième orifices (22, 28).

3. Elingue selon la revendication 2, **caractérisée par le fait que** ladite paroi courbe convexe (50) est intégralement réalisée dans ladite pièce solide (21).

4. Elingue selon l'une des revendications 2 et 3, **caractérisée par le fait que** lesdits moyens de verrouillage-blocage (20) comportent en outre une gorge (52) réalisée en creux dans ladite paroi courbe convexe (50), ladite gorge étant ouverte latéralement et à ses deux extrémités, l'axe (53) de cette dite gorge (52) faisant un angle non nul avec une droite passant sensiblement par les centres des premier et deuxième orifices (22, 28), cette dite gorge (52) étant en outre définie sur une surface sensiblement cylindrique de révolution de diamètre au moins égal à celui du dit câble (10), la profondeur maximale de cette dite gorge (52) étant au plus égale au diamètre du dit câble (10).

5. Elingue selon l'une des revendications 2 à 4, **caractérisée par le fait que** ladite paroi courbe convexe (50) est définie sur une surface sensiblement cylindrique de révolution dont le diamètre est au moins égal à quatre fois le diamètre du dit câble (10).

6. Elingue selon l'une des revendications précédentes, **caractérisée par le fait que** les moyens (23) pour solidariser la première extrémité (11) du dit câble (10) avec ladite pièce solide (21) via ledit premier trou (24) sont constitués **par le fait que** ledit trou débouche en surface de la pièce solide (21) par un quatrième orifice (60), ledit câble (10) passant dans ledit trou de façon que sa première extrémité (11) émerge de ladite pièce solide (21) par ledit quatrième orifice (60), et qu'ils comportent une bague (61) fixée sur la partie émergente de la première extrémité (11) du câble (10), la dimension transversale de ladite bague étant définie de façon à former un épaulement sur le bord du dit quatrième orifice (60).

7. Elingue selon l'une des revendications précédentes, **caractérisée par le fait que** ladite percée traversante (25) et ledit trou (24) sont réalisés dans ladite pièce solide (21) suivant deux axes sensiblement parallèles.

8. Elingue selon l'une des revendications précédentes, **caractérisée par le fait qu'**elle comporte en outre des moyens pour exercer une force en un point d'appui (70) situé sur la partie de câble (30) émergeant du troisième orifice (29), ce dit point d'appui étant situé à proximité du troisième orifice (29) et ladite force étant au moins l'une des forces suivantes:
• (i) une première force sensiblement parallèle à l'axe longitudinal (71) de ladite percée traversante (25) et orientée pour tendre à éloigner la partie de câble (30) émergeant du troisième orifice (29), de ce troisième orifice,
• (ii) une deuxième force sensiblement perpendiculaire à l'axe longitudinal (71) de ladite percée traversante (25), et
• (iii) une troisième force oblique par rapport à l'axe longitudinal (71) de ladite percée traversante (25) pour tendre à éloigner la partie de câble (30) émergeant du troisième orifice (29), de ce troisième orifice.

9. Elingue selon la revendication 8, **caractérisée par le fait que** les moyens pour exercer une force au dit point d'appui (70) comportent : une lame (72), des moyens pour fixer une première extrémité (73) de ladite lame (72) en un endroit déterminé (74) de la surface de ladite pièce solide (21) de façon que la seconde extrémité (75) de ladite lame (72) vienne en contact avec la partie de câble (30) émergeant du troisième orifice (29), en ledit point d'appui (70), la longueur de ladite lame (72) prise entre cet endroit déterminé (74) et sa seconde extrémité (75) étant supérieure à la distance minimale séparant cet endroit déterminé (74) et de la surface latérale de la partie de câble (30) émergeant du troisième orifice (29) située au niveau du dit troisième orifice.

10. Elingue selon la revendication 8, **caractérisée par le fait que** les moyens pour exercer une force au dit point d'appui (70) sont constitués par une rondelle (90) dont la percée centrale (78) est d'un diamètre supérieur à celui du dit câble (10) et inférieure à la dimension hors-tout de ladite bague (61), la première extrémité (11) du dit câble (10) passant dans ladite percée (78), ladite rondelle étant interposée entre ladite bague et la surface de ladite pièce solide (21).

11. Elingue selon l'une des revendications précédentes, **caractérisée par le fait qu'**elle comporte en outre au moins une butée (80) solidaire en saillie de ladite partie de surface (121), ladite butée (80) étant agencée pour maintenir et guider au moins temporairement la partie de câble (30) passant entre la portion de câble (31) comprise entre les premier et deuxième orifices (22, 28) et la partie de surface (121), à proximité de cette dite partie de surface (121).

## Patentansprüche

1. Seilgeschirr zur ausschließlichen Verwendung für die Verbindung einer Last (1) mit Hebemitteln (2), wobei das Seilgeschirr ein Seil (10), Verriegelungs-/Blockiermittel (20), die in Zusammenwirkung mit einem ersten Ende (11) des Seils montiert sind, und Mittel (13) zum Verhaken des zweiten Endes (12) des Seils und der Hebemittel (2) umfasst, **dadurch gekennzeichnet, dass** die Verriegelungs-/Blockiermittel (20) umfassen:
- ein festes Teil (21),
- ein Loch (24), das in dem festen Teil (21) verwirklicht ist und in die Oberfläche des festen Teils (21) durch eine erste Öffnung (22) mündet,
- Mittel (23) zum Befestigen des ersten Endes (11) des Seils (10) an dem festen Teil (21) durch das erste Loch (24) hindurch,
- ein Durchgangsloch (25), das in dem festen Teil (21) verwirklicht ist und in die Oberfläche des festen Teils durch eine zweite und eine dritte Öffnung (28, 29) mündet, wobei sich die erste und die zweite Öffnung (22, 28) in einem von null verschiedenen gegenseitigen Abstand befinden,
- wobei das Seil (10) in Zusammenwirkung mit dem festen Teil (21) in der Weise montiert wird, dass es, nachdem es das feste Teil durch die erste Öffnung (22) verlassen hat, sich in das Durchgangsloch (25) bewegt und darin durch die zweite Öffnung (28) eintritt und aus dem festen Teil (21) durch die dritte Öffnung (29) austritt, wobei sich der Teil (30) des Seils, der die dritte Öffnung (29) verlässt, dann zwischen dem Seilabschnitt (31), der zwischen der ersten und der zweiten Öffnung (22, 28) vorhanden ist, und dem Oberflächenabschnitt (121) des festen Teils (21), der zwischen der ersten und der zweiten Öffnung (22, 28) vorhanden ist, bewegt, indem er eine Schleife (40) bildet, die die Last (1) umgeben kann.

2. Seilgeschirr nach Anspruch 1, **dadurch gekennzeichnet, dass** die Verriegelungs-/Blockiermittel (20) außerdem eine konvex gekrümmte Wand (50) umfassen, die eine ununterbrochene Krümmung aufweist und in der Form eines gebogenen Stegs mit einem Teil der Ränder der ersten und der zweiten Öffnung (22, 28) verbunden ist.

3. Seilgeschirr nach Anspruch 2, **dadurch gekennzeichnet, dass** die konvex gekrümmte Wand (50) in dem festen Teil (21) einteilig verwirklicht ist.

4. Seilgeschirr nach einem der Ansprüche 2 und 3, **dadurch gekennzeichnet, dass** die Verriegelungs-/Blockiermittel (20) außerdem eine Kehle (52) aufweisen, die in der konvex gekrümmten Wand (50) hohl verwirklicht ist, wobei die Kehle seitlich und an ihren beiden Enden offen ist, wobei die Achse (53) dieser Kehle (52) mit einer Geraden, die im Wesentlichen durch die Zentren der ersten und der zweiten Öffnung (22, 28) verläuft, einen von null verschiedenen Winkel bildet, wobei diese Kehle (52) außerdem in einer im Wesentlichen zylindrischen, rotationssymmetrischen Oberfläche, deren Durchmesser im Wesentlichen gleich jenem des Seils (10) ist, definiert ist, wobei die maximale Tiefe dieser Kehle (52 höchstens gleich dem Durchmesser des Seils (10) ist.

5. Seilgeschirr nach einem der Ansprüche 2 bis 4, **dadurch gekennzeichnet, dass** die konvex gekrümmte Wand (50) auf einer im Wesentlichen zylindrischen, rotationssymmetrischen Oberfläche definiert ist, deren Durchmesser wenigstens gleich dem vierfachen Durchmesser des Seils (10) ist.

6. Seilgeschirr nach einem der vorhergehenden Ansprüche, **dadurch gekennzeichnet, dass** die Mittel (23) zum Befestigen des ersten Endes (11) des Seils (10) an dem festen Teil (21) durch das erste Loch (24) hindurch dadurch gebildet sind, dass das Loch in die Oberfläche des festen Teils (21) durch eine vierte Öffnung (60) mündet, wobei sich das Seil (10) in dem Loch in der Weise bewegt, dass sein erstes Ende (11) aus dem festen Teil (21) durch die vierte Öffnung (60) austritt, und dass sie einen Ring (61) aufweisen, der an dem austretenden Teil des ersten Endes (11) des Seils (10) befestigt ist, wobei die transversale Abmessung des Rings in der Weise definiert ist, dass an dem Rand der vierten Öffnung (60) eine Schulter gebildet ist.

7. Seilgeschirr nach einem der vorhergehenden Ansprüche, **dadurch gekennzeichnet, dass** das Durchgangsloch (25) und das Loch (24) in dem festen Teil (21) längs zweier im Wesentlichen paralleler Achsen verwirklicht sind.

8. Seilgeschirr nach einem der vorhergehenden Ansprüche, **dadurch gekennzeichnet, dass** es außerdem Mittel umfasst, um eine Kraft auf einen Abstützpunkt (70) auszuüben, der sich auf dem Teil (30) des Seils befindet, der aus der dritten Öffnung (29) austritt, wobei sich dieser Abstützpunkt in der Nähe der dritten Öffnung (29) befindet und die Kraft wenigstens gleich einer der folgenden Kräfte ist:
- (i) einer ersten Kraft im Wesentlichen parallel zu der Längsachse (71) des Durchgangslochs (25), die so orientiert ist, dass sie bestrebt ist, den aus der dritten Öffnung (29) austretenden Teil (30) des Seils von dieser dritten Öffnung zu entfernen,
- (ii) einer zweiten Kraft im Wesentlichen senkrecht zu der Längsachse (71) des Durchgangslochs (25) und
- (iii) einer dritten Kraft, die in Bezug auf die Längsachse (71) des Durchgangslochs (25) schräg orientiert ist und bestrebt ist, den Teil (30) des Seils, der aus der dritten Öffnung (29) austritt, von dieser dritten Öffnung zu entfernen.

9. Seilgeschirr nach Anspruch 8, **dadurch gekennzeichnet, dass** die Mittel zum Ausüben einer Kraft auf den Abstützpunkt (70) umfassen: ein Plättchen (72), Mittel, um ein erstes Ende (73) des Plättchens (72) an einem bestimmten Ort (74) der Oberfläche des festen Teils (21) in der Weise zu befestigen, dass das zweite Ende (75) des Plättchens (72) mit dem Teil (30) des Seils, der aus der dritten Öffnung (29) austritt, bei dem Abstützpunkt (70) in Kontakt gelangt, wobei die Länge des Plättchens (72) zwischen diesem bestimmten Ort (74) und seinem zweiten Ende (75) größer ist als der minimale Abstand, der diesen bestimmten Ort (74) von der seitlichen Oberfläche des Teils (30) des Seils, der aus der dritten Öffnung (29) austritt und sich auf Höhe dieser dritten Öffnung befindet, trennt.

10. Seilgeschirr nach Anspruch 8, **dadurch gekennzeichnet, dass** die Mittel zum Ausüben einer Kraft auf den Abstützpunkt (70) durch eine Scheibe (90) gebildet sind, deren Mittelloch (78) einen Durchmesser hat, der größer ist als jener des Seils (10) und kleiner ist als die Abmessung über alles des Rings (61), wobei das erste Ende (11) des Seils (10) durch dieses Loch (78) verläuft, wobei die Scheibe zwischen den Ring und die Oberfläche des festen Teils (21) eingefügt ist.

11. Seilgeschirr nach einem der vorhergehenden Ansprüche, **dadurch gekennzeichnet, dass** es außerdem wenigstens einen Anschlag (80) umfasst, der mit dem Oberflächenabschnitt (121) vorstehend verbunden ist, wobei der Anschlag (80) dafür ausgelegt ist, den Teil (30) des Seils, der sich zwischen dem Seilabschnitt (31), der zwischen der ersten und der zweiten Öffnung (22, 28) vorhanden ist, und dem Oberflächenabschnitt (121) bewegt, wenigstens vorübergehend in der Umgebung dieses Oberflächenabschnitts (121) zu halten und zu führen.

## Claims

1. A single-use sling for making a connection between a load (1) and hoist means (2), said sling comprising a cable (10), locking/blocking means (20) mounted in co-operation with a first end (11) of said cable, and attachment means (13) for attaching the second end (12) of said cable to the hoist means (2), the sling being **characterized by** the fact that said locking/blocking means (20) comprise:
· a solid part (21);
· a hole (24) made in said solid part (21) and opening out into the surface of said solid part (21) via a first orifice (22);
· securing means (23) for securing the first end (11) of said cable (10) to said solid part (21) via said first hole (24);
· a through bore (25) made in said solid part (21) and opening out into the surface of said solid part via second and third orifices (28, 29), said first and second orifices (22, 28) being situated at a non-zero distance apart from each other; and
· said cable (10) being mounted in co-operation with said solid part (21) in such a manner that after leaving said solid part via said first orifice (22) it passes through said through bore (25), entering therein via the second orifice (28) and emerging from said solid part (21) via the third orifice (29), the cable portion (30) emerging from said third orifice (29) then passing between the cable segment (31) that extends between the first and second orifices (22, 28) and the surface portion (121) of the solid part (21) that extends between the first and second orifices (22, 28), thereby forming a loop (40) suitable for, surrounding said load (1).

2. A sling according to claim 1, **characterized in that** said locking/blocking means (20) further include a convex curved wall (50) presenting continuous curvature and interconnecting portions of the edges of the first and second orifices (22, 28) like a bridge.

3. A sling according to claim 2, **characterized by** the fact that said convex curved wall (50) is made entirely in said solid part (21).

4. A sling according to claim 2 or claim 3, **characterized by** the fact that said locking/blocking means (20) further include a groove (52) hollowed out in said convex curved wall (50), said groove being open laterally and at both ends, the axis (53) of said groove (52) forming a non-zero angle with a straight line passing substantially through the centers of the first and second orifices (22, 28), said groove (52) also being defined on a substantially circularly cylindrical surface of diameter not less than the diameter of said cable (10), the maximum depth of said groove (52) being no greater than the diameter of said cable (10).

5. A sling according to any one of claims 2 to 4, **characterized by** the fact that said convex curved wall (50) is defined by a substantially circularly cylindrical surface of diameter that is not less than four times the diameter of said cable (10).

6. A sling according to any preceding claim, **characterized by** the fact that the means (23) for securing the first end (11) of said cable (10) to said solid part (21) via said first hole (24) are constituted by the fact that said hole opens out into the surface of the solid part (21) via a fourth orifice (60), said cable (10) passing through said hole in such a manner that its first end (11) emerges from said solid part (21) via said fourth orifice (60), and said means include a ring (61) fastened on the emerging portion of the first end (11) of the cable (10), the transverse dimension of said ring being defined so as to form a shoulder on the edge of said fourth orifice (60).

7. A sling according to any preceding claim, **characterized by** the fact that said through bore (25) and said hole (24) are made in said solid part (21) along two axes that are substantially parallel.

8. A sling according to any preceding claim, **characterized by** the fact that it further includes means for exerting a force at a bearing point (70) situated on the cable portion (30) emerging from the third orifice (29), said bearing point being situated in the proximity of the third orifice (29) and said force being at least one of the following forces:
i) a first force that is substantially parallel to the longitudinal axis (71) of said through bore (25) and oriented to tend to move the cable portion (30) emerging from the third orifice (29) away from said third orifice;
ii) a second force that is substantially perpendicular to the longitudinal axis (71) of said through bore (25); and
iii) a third force that is oblique relative to the longitudinal axis (71) of said through bore (25) tending to move the cable portion (30) emerging from the third orifice (29) away from the third orifice.

9. A sling according to claim 8, **characterized by** the fact that the means for exerting a force on said bearing point (70) comprise: a blade (72); and means for fastening a first end (73) of said blade (72) to a determined location (74) of the surface of said solid part (21) in such a manner that the second end (75) of said blade (72) comes into contact with the cable portion (30) emerging from the third orifice (29) at said bearing point (70), the length of said blade (72) between said determined location (74) and its second end (75) being greater than the minimum distance between said determined location (74) and the side surface of the cable portion (30) emerging from the third orifice (29) situated at said third orifice.

10. A sling according to claim 8, **characterized by** the fact that the means for exerting a force at said bearing point (70) are constituted by a washer (90) having a central hole (78) with a diameter greater than the diameter of said cable (10) and less than the outside dimension of said ring (61), the first end (11) of said cable (10) passing through said central hole (78), said washer being interposed between said ring and the surface of said solid part (21).

11. A sling according to any preceding claim, **characterized by** the fact that it further includes at least one abutment (80) secured to and projecting from said surface portion (121), said abutment (80) being arranged to hold and to guide at least temporarily the cable portion (30) passing between the cable segment (31) extending between the first and second orifices (22, 28) and the surface portion (121), in the proximity of said surface portion (121).
